(19) Europäisches Patentamt
European Patent Office
Office européen des brevets

(11) EP 0 612 808 B1

(12) **EUROPÄISCHE PATENTSCHRIFT**

(45) Veröffentlichungstag und Bekanntmachung des Hinweises auf die Patenterteilung:
**31.01.1996 Patentblatt 1996/05**

(51) Int Cl.6: **C08L 69/00**
// (C08L69/00, 75:04, 25:08)

(21) Anmeldenummer: **94102045.5**

(22) Anmeldetag: **10.02.1994**

(54) **Thermoplastische Formmassen auf der Basis von Polycarbonaten, thermoplastischen Polyurethanen und Styrolcopolymerisaten**

Thermoplastic moulding compositions based on polycarbonates, thermoplastic polyuethanes and styrene copolymers

Masses à mouler thermoplastiques à base de polycarbonates, de polyuréthanes thermoplastiques et de copolymères de styrène

(84) Benannte Vertragsstaaten:
**BE DE ES FR GB IT NL**

(30) Priorität: **24.02.1993 DE 4305637**

(43) Veröffentlichungstag der Anmeldung:
**31.08.1994 Patentblatt 1994/35**

(73) Patentinhaber: **BASF Aktiengesellschaft**
**D-67063 Ludwigshafen (DE)**

(72) Erfinder: **Niessner, Norbert, Dr.**
**D-67159 Friedelsheim (DE)**

(56) Entgegenhaltungen:
**EP-A- 0 337 206** **EP-A- 0 440 442**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 612 808 B1

## Beschreibung

Die vorliegende Erfindung betrifft thermoplastische Formmassen, enthaltend als wesentliche Komponenten

A) 10 bis 90 Gew.-% eines aromatischen Polycarbonats

B) 5 bis 50 Gew.-% eines thermoplastischen Polyurethans
und

C) 5 bis 40 Gew.-% eines Copolymerisats bestehend aus

$c_1$) 70 bis 85 Gew.-% Styrol oder substituierten Styrolen der allgemeinen Formel I

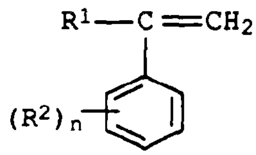

I

wobei $R^1$ einen Alkylrest mit 1 bis 8 C-Atomen oder ein Wasserstoffatom und $R^2$ einen Alkylrest mit 1 bis 8 C-Atomen darstellen und n den Wert 0, 1, 2 oder 3 hat

$c_2$) 15 bis 30 Gew.-% (Meth)acrylnitril, (Meth)acrylsäure, $C_1$-bis $C_8$-Alkyl(meth)acrylate, Maleinsäureanhydrid, Acrylamid, Vinylester von $C_1$- bis $C_6$-Carbonsäuren, mit $C_1$- bis $C_8$-Alkyl- oder $C_6$- bis $C_{20}$-Arylgruppen N-substituierte Maleinsäureimide oder deren Mischungen.

Außerdem betrifft die Erfindung die Verwendung dieser thermoplastischen Formmassen zur Herstellung von Fasern, Folien und Formkörpern sowie die hierbei erhältlichen Formkörper aus den thermoplastischen Formmassen.

Thermoplastische Formmassen auf der Basis von Polycarbonaten, thermoplastischen Polyurethanen und Styrolcopolymerisaten finden aufgrund ihres Eigenschaftsprofils in den verschiedensten Bereichen Verwendung, beispielsweise im Automobilbau, im Bausektor, im Freizeit- und Sportbereich, für Büromaschinen sowie in elektrischen Geräten und Haushaltsgeräten.

Aus der EP-A 265 790 sind Mischungen aus Polycarbonaten und thermoplastischen Polyurethanen bekannt, welche ggf. auch Styrol-Polymerisate enthalten können. Hierbei sind jedoch die Fließfahigkeit und die Transparenz nicht zufriedenstellend.

Die EP-A 337 206 beschreibt Mischungen aus thermoplastischen Poly(ester)carbonaten, thermoplastischen Polyurethanen und Pfropfpolymerisaten auf Dienbasis. Diese Mischungen sind jedoch nicht transparent, weisen eine niedrige Fließfahigkeit auf und eine schlechte Warmealterungsstabilität.

Mischungen aus Polycarbonaten, thermoplastischen Polyurethanen und Acrylpolymeren sind in der US-A 4 179 479 beschrieben. Hierbei ist jedoch die Spannungsrißbeständigkeit bei Einwirkung von Lösungsmitteln nicht zufriedenstellend.

Aus der US-A 4 912 177 sind Formmassen aus Polycarbonaten und thermoplastischen Polyurethanen bekannt. Nachteilig wirkt sich hier die geringe Fließfähigkeit aus.

Aufgabe der vorliegenden Erfindung war es daher, thermoplastische Formmassen auf der Basis von Polycarbonaten und thermoplastischen Polyurethanen zur Verfügung zu stellen, die die genannten Nachteile nicht aufweisen.

Die Aufgabe wird erfindungsgemaß gelöst durch die eingangs definierten thermoplastischen Formmassen. Außerdem wurde die Verwendung dieser thermoplastischen Formmassen zur Herstellung von Fasern, Folien und Formkörpern sowie die hierbei erhältlichen Formkörper aus den thermoplastischen Formmassen gefunden.

Als Komponente A) enthalten die erfindungsgemäßen thermoplastischen Formmassen 10 bis 90 Gew.-%, vorzugsweise 30 bis 80 Gew.-%, insbesondere 40 bis 75 Gew.-%, mindestens eines Polycarbonats.

Geeignete Polycarbonate sind beispielsweise solche auf Basis von Diphenolen der allgemeinen Formel II

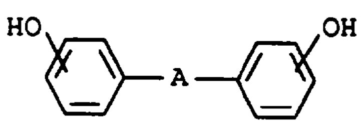

II

worin A eine Einfachbindung, eine $C_1$- bis $C_3$-Alkylen-, eine $C_2$-bis $C_3$-Alkyliden-, eine $C_3$- bis $C_6$-Cycloalkylidengruppe, sowie -S-oder -$SO_2$- bedeutet.

Bevorzugte Diphenole der Formel II sind beispielsweise 4,4'-Dihydroxydiphenyl, 2,2-Bis-(4-hydroxyphenyl)-propan,

2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und l,l-Bis-(4-hydroxyphenyl)-cyclohexan.

Sowohl Homopolycarbonate als auch Copolycarbonate sind als Komponente A) geeignet, bevorzugt sind neben dem Bisphenol A-Homopolymerisat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Weiterhin können die als Komponente A) geeigneten Polycarbonate an den aromatischen Einheiten ein- bis dreifach mit Halogenatomen, bevorzugt mit Chlor und/oder Brom, substituiert sein. Besonders bevorzugt sind jedoch halogenfreie Verbindungen.

Als besonders geeignet haben sich Polycarbonate erwiesen, die relative Viskositäten $\eta_{rel}$ von 1,10 bis 1,50, insbesondere von 1,25 bis 1,40 aufweisen. Dies entspricht mittleren Molekulargewichten $M_w$ (Gewichtsmittelwert) von 10 000 bis 200 000, vorzugsweise von 20 000 bis 80 000.

Die Diphenole der allgemeinen Formel II sind an sich bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782.)

Geeignete Kettenabbrecher sind beispielsweise Phenol, p-tert.-Butylphenol aber auch langkettige Alkylphenole wie 4-(1,3-Tetramethyl-butyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie beispielsweise p-Nonylphenyl, 3,5-di-tert.-Butylphenol, p-tert.-Octylphenol, p-Dodecylphenol, 2-(3,5-dimethyl-heptyl)-phenol und 4-(3,5-Dimethylheptyl)-phenol.

Weitere geeignete Polycarbonate sind solche auf Basis von Hydrochinon oder Resorcin.

Mischungen verschiedener Polycarbonate können ebenfalls als Komponente A) eingesetzt werden.

Als Komponente B) enthalten die erfindungsgemaßen thermoplastischen Formmassen 5 bis 50 Gew.-%, vorzugsweise 10 bis 40 Gew.-%, insbesondere 15 bis 30 Gew.-% mindestens eines thermoplastischen Polyurethans.

Thermoplastische Polyurethane und Verfahren zu ihrer Herstellung sind an sich bekannt und beispielsweise in der DE-A 36 28 562 beschrieben.

Geeignete thermoplastische Polyurethane können hergestellt werden durch Umsetzung von organischen, vorzugsweise aromatischen Diisocyanaten, Polyhydroxylverbindungen mit Molekulargewichten (Gewichtsmittelwert) von 500 bis 8000 und Kettenverlängerungsmitteln mit Molekulargewichten (Gewichtsmittelwert) von 60 bis 400 ggf. in Gegenwart von Katalysatoren.

Als organische Diisocyanate kommen beispielsweise aliphatische, cycloaliphatische und vorzugsweise aromatische Diisocyanate in Betracht. Im einzelnen seien beispielhaft genannt: aliphatische Diisocyanate, wie Hexamethylen-diisocyanat, cycloaliphatische Diisocyanate, wie Isophoron-diisocyanat, 1,4-Cyclohexan-diisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische und vorzugsweise aromatische Diisocyanate, wie 2,4-Toluylen-diisocyanat, Gemische aus 2,4- und 2,6-Toluylen-diisocyanat, 4,4'-, 2,4'-und 2,2'-Diphenylmethan-diisocyanat, Gemische aus 2,4'- und 4,4'-Diphenylmethan-diisocyanat, urethanmodifizierte flüssige 4,4'- und/oder 2,4'-Diphenylmethan-diisocyanate, 4,4'-Diisocyanato-diphenylethan-(1,2) und 1,5-Naphthylendiisocyanat. Vorzugsweise verwendet werden Hexamethylen-diisocyanat, Isophoron-diisocyanat, 1,5-Naphthylen-diisocyanat, Diphenylmethan-diisocyanat-Isomerengemische mit einem 4,4'-Diphenylmethan-diisocyanatgehalt von größer als 96 Gew.-% und insbesondere 4,4'-Diphenylmethandiisocyanat.

Als höhermolekulare Polyhydroxylverbindungen mit Molekulargewichten von 500 bis 8000 eignen sich vorzugsweise Polyetherole und Polyesterole. In Betracht kommen jedoch auch hydroxylgruppenhaltige Polymere, beispielsweise Polyacetale, wie Polyoxymethylene und vor allem wasserunlösliche Formale, z.B. Polybutandiolformal und Polyhexandiolformal, und Polycarbonate, insbesondere solche aus Diphenylcarbonat und Hexandiol-1,6, hergestellt durch Umesterung, mit den oben genannten Molekulargewichten. Die Polyhydroxylverbindungen müssen zumindest überwiegend linear, d.h. im Sinne der Isocyanatreaktion difunktionell aufgebaut sein. Die genannten Polyhydroxylverbindungen können als Einzelkomponenten oder in Form von Mischungen zur Anwendung kommen.

Geeignete Polyetherole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, 1,2- und 2,3-Butylenoxid. Vorzugsweise Anwendung finden Ethylenoxid und Mischungen aus Propylenoxid-1,2 und Ethylenoxid. Die Alkylenoxide können einzeln, alternierend nacheinander oder als Mischung verwendet werden. Als Startermolekül kommen beispielsweise in Betracht: Wasser, Aminoalkohole, wie N-Alkyl-diethanolamine, beispielsweise N-Methyl-diethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans (Polyoxytetramethylen-glykole).

Vorzugsweise verwendet werden Polyetherole aus Propylenoxid-1,2 und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist und insbesondere Polyoxytetramethylen-glykole.

Solche Polyetherole können erhalten werden, indem man z.B. an das Startermolekül zunächst das Propylenoxid-1,2 und daran anschließend das Ethylenoxid polymerisiert oder zunächst das gesamte Propylenoxid-1,2 im Gemisch mit einem Teil des Ethylenoxids copolymerisiert und den Rest des Ethylenoxids anschließend anpolymerisiert oder schrittweise zunächst einen Teil des Ethylenoxids, dann das gesamte Propylenoxid-1,2 und dann den Rest des Ethylenoxids an das Startermolekül anpolymerisiert.

Die im wesentlichen linearen Polyetherole besitzen Molekulargewichte (Gewichtsmittelwert) von 500 bis 8 000, vorzugsweise 600 bis 6 000 und insbesondere 800 bis 3 500. Sie können sowohl einzeln als auch in Form von Mischungen untereinander zu Anwendung kommen.

Geeignete Polyesterole können beispielsweise aus Dicarbonsäuren mit 2 bis 12 Kohlenstoffatomen, vorzugsweise 4 bis 8 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Desgleichen sind Mischungen aus aromatischen und aliphatischen Dicarbonsäuren einsetzbar. Zur Herstellung der Polyesterole kann es gegebenenfalls vorteilhaft sein, anstelle der Dicarbonsäuren die entsprechenden Dicarbonsäurederivate, wie Dicarbonsäureester mit 1 bis 4 Kohlenstoffatomen im Alkoholrest, Dicarbonsäureanhydride oder Dicarbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 3 und Dipropylenglykol. Je nach den gewünschten Eigenschaften können die mehrwertigen Alkohole allein oder gegebenenfalls in Mischungen untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von W-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.

Als Polyesterole vorzugsweise verwendet werden Dialkylenglykolpolyadipate mit 2 bis 6 Kohlenstoffatomen im Alkylenrest, wie z.B. Ethandiol-polyadipate, 1,4-Butandiol-polyadipate, Ethandiolbutandiol-1,4-polyadipate, 1,6-Hexandiol-neopentylglykol-polyadipate, Polycaprolactone und insbesondere 1,6-Hexandiol-1,4-butandiol-polyadipate.

Die Polyesterole besitzen Molekulargewichte (Gewichtsmittelwert) von 500 bis 6 000, vorzugsweise von 800 bis 3 500.

Als Kettenverlängerungsmittel mit Molekulargewichten (Gewichtsmittelwert) von 60 bis 400, vorzugsweise 60 bis 300, kommen vorzugsweise aliphatische Diole mit 2 bis 12 Kohlenstoffatomen, vorzugsweise mit 2, 4 oder 6 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4, Hydroxyalkylenether des Hydrochinons, wie z.B. 1,4-Di-(β-hydroxyethyl)-hydrochinon, (cyclo)aliphatische Diamine, wie z.B. 4,4'-Diamino-dicyclohexylmethan, 3,3'-Dimethyl-4,4'-diamino-dicyclohexylmethan, Isophoron-diamin, Ethylendiamin, 1,2-, 1,3-Propylen-diamin, N-Methyl-propylendiamin-1,3, N,N'-Dimethyl-ethylendiamin und aromatische Diamine, wie z.B. 2,4- und 2,6-Toluylen-diamin, 3,5-Diethyl-2,4- und -2,6-toluylen-diamin und primäre ortho-di, tri- und/oder tetraalkylsubstituierte 4,4'-Diamino-diphenylmethane.

Zur Einstellung von Härte und Schmelzpunkt der thermoplastischen Polyurethane können die Polyhydroxyl-Verbindungen und Kettenverlängerungsmittel in relativ breiten molaren Verhältnissen variiert werden. Bewährt haben sich molare Verhältnisse von Polyhydroxylverbindungen zu Kettenverlängerungsmitteln von 1:1 bis 1:12, insbesondere von 1:1,8 bis 1:6,4, wobei die Härte und der Schmelzpunkt der thermoplastischen Polyurethane mit zunehmendem Gehalt an Diolen ansteigt.

Zur Herstellung der thermoplastischen Polyurethane werden die Aufbaukomponenten in solchen Mengen zur Reaktion gebracht, daß das Äquivalenzverhältnis von NCO-Gruppen der Diisocyanate zur Summe der Hydroxylgruppen oder Hydroxyl- und Aminogruppen der Polyhydroxylverbindungen und Kettenverlängerungsmittel 1:0,85 bis 1:1,20, vorzugsweise 1:0,95 bis 1:1,05 und insbesondere 1:0,98 bis 1:1,02 beträgt.

Geeignete Katalysatoren, welche insbesondere die Reaktion zwischen den NCO-Gruppen der Diisocyanate und den Hydroxylgruppen der Polyhydroxylverbindungen und Kettenverlängerungsmittel beschleunigen, sind die nach dem Stand der Technik bekannten und üblichen tertiären Amine, wie z.B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Teilen pro 100 Teile Polyhydroxylverbindung eingesetzt.

Als Komponente C) enthalten die erfindungsgemäßen thermoplastischen Formmassen 5 bis 40 Gew.-%, vorzugsweise 10 bis 30 Gew.-% eines Copolymerisats bestehend aus

$c_1$) 70 bis 85 Gew.-%, vorzugsweise 75 bis 82 Gew.-% Styrol oder substituierte Styrole der allgemeinen Formel I und

$c_2$) 15 bis 30 Gew.-%, vorzugsweise 18 bis 25 Gew.-% (Meth)acrylnitril, (Meth)acrylsäure, $C_1$- bis $C_8$-Alkyl(meth) acrylate, Maleinsäureanhydrid, Acrylamid, Vinylester von $C_1$- bis $C_6$-Carbonsäuren, mit $C_1$- bis $C_8$-Alkyl- oder C6- bis $C_{20}$-Arylgruppen N-substituierte Maleinsäureimide oder deren Mischungen.

Als Komponente $c_1$) werden bevorzugt Styrol und α-Methylstyrol eingesetzt. Von dem Komponenten $c_2$) sind als bevorzugt zu nennen: Acrylnitril, $C_1$- bis $C_4$-Alkylmethacrylate, insbesondere Methylmethacrylat und tert.-Butylmethacrylat, Maleinsäureanhydrid sowie Phenylmaleinimid und deren Mischungen.

Besonders bevorzugt werden als Komponente C) Styrol-Acrylnitril-Copolymere, α-Methylstyrol-Acrylnitril-Copolymere, Styrol-Maleinsäureanhydrid-Copolymere, Styrol-Phenylmaleinimid-Copolymere, Styrol-Methylmethacrylat-Copolymere, Styrol-Acrylnitril-Maleinsäureanhydrid-Copolymere, Styrol-Acrylnitril-Phenylmaleinimid-Copolymere, α-Methylstyrol-Acrylnitril-Methylmethacrylat-Copolymere, α-Methylstyrol-Acrylnitril-tert.-Butylmethacrylat-Copolymere, Styrol-Acrylnitril-tert.-Butylmethacrylat-Copolymere, insbesondere Styrol-Acrylnitril-Copolymere und α-Methylstyrol-Acrylnitril-Copolymere.

Die Copolymerisate C) weisen Molekulargewichte $\overline{M}_w$ (Gewichtsmittelwert) von 10 000 bis 1 000 000 auf und können nach bekannten Verfahren wie Masse-, Suspensions-, Lösungs- oder Emulsionspolymerisation hergestellt werden.

Weiterhin können die erfindungsgemäßen thermoplastischen Formmassen bis zu 60 Gew.-%, insbesondere bis zu 20 Gew.-% faser-oder teilchenförmige Füllstoffe oder deren Mischungen enthalten. Dabei handelt es sich vorzugsweise um kommerziell erhältliche Produkte. Verarbeitungshilfsmittel und Stabilisatoren wie UV-Stabilisatoren, Schmiermittel und Antistatika werden üblicherweise in Mengen von 0,01 bis 5 Gew.-% verwendet, Verstärkungsmittel wie Kohlenstofffasern und Glasfasern hingegen von 5 bis 40 Gew.-%.

Die verwendeten Glasfasern können aus E-, A- oder C-Glas sein und sind vorzugsweise mit einer Schlichte und einem Haftvermittler ausgerüstet. Ihr Durchmesser liegt im allgemeinen zwischen 6 und 20 µm. Es können sowohl Endlosfasern (rovings) als auch Schnittglasfasern mit einer Länge von 1 bis 10 mm, vorzugsweise 3 bis 6 mm, eingesetzt werden.

Weiterhin können Füll- oder Verstärkungsstoffe, wie Glaskugeln, Mineralfasern, Whisker, Aluminiumoxidfasern, Glimmer, Quarzmehl und Wollastonit zugesetzt werden.

Außerdem seien Metallflocken (z.B. Aluminiumflocken der Fa. Transmet Corp.), Metallpulver, Metallfasern, metallbeschichtete Füllstoffe (z.B. nickelbeschichtete Glasfasern) sowie andere Zuschlagsstoffe, die elektromagnetische Wellen abschirmen genannt. Insbesondere kommen Al-Flocken (K 102 der Fa. Transmet) für EMI-Zwecke (electro-magnetic interference) in Betracht; ferner Abmischen dieser Masse mit zusätzlichen Kohlenstoffasern, Leitfähigkeitsruß oder nickelbeschichteten C-Fasern.

Die erfindungsgemaßen Formmassen können ferner weitere Zusatzstoffe enthalten, wie Farbstoffe, Pigmente und Antioxidantien.

Das Mischen der Komponenten A) bis C) und gegebenenfalls der Zusatzstoffe kann nach allen bekannten Methoden erfolgen. Vorzugsweise geschieht jedoch das Mischen der Komponenten durch gemeinsames Extrudieren, Kneten oder Verwalzen. Bevorzugt erfolgt die Herstellung der Formmassen durch Mischen auf einem Extruder bei Temperaturen von 200 bis 320°C.

Die erfindungsgemäßen thermoplastischen Formmassen können nach den bekannten Verfahren der Thermoplastverarbeitung bearbeitet werden, also z.B. durch Extrudieren, Spritzgießen, Kalandrieren, Hohlkörperblasen, Pressen oder Sintern und eignen sich zur Herstellung von Fasern, Folien und Formkörpern.

Die erfindungsgemäßen thermoplastischen Formmassen zeichnen sich durch hohe Zähigkeit bei guter Fließfähigkeit und hoher Warmealterungsstabilität aus.

Beispiele

Es wurden folgende Komponenten eingesetzt.

Komponente A)

Ein handelsübliches Polycarbonat auf der Basis von 2,2-Bis-(4-hydroxyphenyl)propan (Bisphenol A) mit einer Viskositätszahl von 61,6 ml/g, gemessen an einer 0,5 gew.-%igen Lösung in $CH_2Cl_2$ bei 23°C (Makrolon® 2800 der Bayer AG).

Komponente B)

Ein thermoplastisches Polyurethan, hergestellt durch Umsetzung von 1000 g Butandioladipat mit einer OH-Zahl von 46, 360 g 4,4'-Diphenylmethan-diisocyanat und 90,89 g Butandiol.

Komponente C)

Ein Styrol-Acrylnitril-Copolymeres mit 19 Gew.-% Acrylnitril und einer Viskositätszahl von 70 ml/g (gemessen an einer 0,5 gew.-%igen Lösung in Dimethylformamid bei 23°C).

Komponente CV)

Ein Styrol-Acrylnitril-Copolymeres mit 35 Gew.-% Acrylnitril und einer Viskositätszahl von 80 ml/g (gemessen an einer 0,5 gew.-%igen Lösung in Dimethylformamid bei 23°C).

Zusatzstoff

60 Gew.-% $TiO_2$ gemischt mit 40 Gew.-% CV

Beispiel 1

Die Komponenten wurden auf einem Doppelschneckenextruder (ZSK 30 der Fa. Werner & Pfleiderer) bei 250°C und einem Durchsatz von 10 kg/h gemischt, als Strang ausgetragen, gekühlt und granuliert. Aus dem Granulat wurden anschließend die Formkörper durch Spritzgießen hergestellt.

Vergleichsbeispiele V1 und V2

Es wurde analog dem Beispiel 1 gearbeitet.

Die Zusammensetzungen und Eigenschaften der thermoplastischen Formmassen sind in der Tabelle zusammengestellt.

Die Kerbschlagzähigkeit ak (Spritztemperatur/Prüftemperatur) wurde nach DIN 53 453 an bei 220 und 250°C gespritzten Normkleinstäben bei 23°C Prüftemperatur gemessen.

Die Wärmeformbeständigkeit Vicat B 50 wurde nach DIN 54 460 bestimmt.

Der Volumenfließindex MVI wurde nach DIN 53 735 bei einer Temperatur von 200°C und einer Belastung von 21,6 kg bestimmt.

Die Vergilbung bei Wärmelagerung wurde visuell nach 16 Tagen bei 110°C bestimmt.

Werte:

1 = keine Veränderung
2 = geringe Veränderung
3 = deutlich sichtbare Veränderung
4 = starke Vergilbung

Tabelle

| | Komponenten [Gew.-%] | | | | | $a_k$ (220/23) | $a_k$ (250/23) | Vicat | MVI | Vergilbung |
|---|---|---|---|---|---|---|---|---|---|---|
| Bsp. | A) | B) | C) | CV) | Zusatzstoff | [kJ/m²] | [kJ/m²] | [°C] | [ml/10 min] | |
| 1 | 58,8 | 19,6 | 19,6 | - | 2 | 63 | 57 | 103 | 16,7 | 1-2 |
| V1 | 58,8 | 19,6 | - | 19,6 | 2 | 19 | 55 | 99 | 11,6 | 2-3 |
| V2 | 78,4 | 19,6 | - | - | 2 | 63 | 61 | 124 | 5,0 | 4 |

**Patentansprüche**

1. Thermoplastische Formmassen, enthaltend als wesentliche Komponenten

A) 10 bis 90 Gew.-% eines aromatischen Polycarbonats

B) 5 bis 50 Gew.-% eines thermoplastischen Polyurethans und

C) 5 bis 40 Gew.-% eines Copolymerisats bestehend aus

$c_1$) 70 bis 85 Gew.-% Styrol oder substituierten Styrolen der allgemeinen Formel I

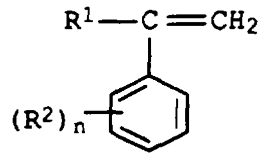

I

wobei $R^1$ einen Alkylrest mit 1 bis 8 C-Atomen oder ein Wasserstoffatom und $R^2$ einen Alkylrest mit 1 bis 8 C-Atomen darstellen und n den Wert 0, 1, 2 oder 3 hat

$c_2$) 15 bis 30 Gew.-% (Meth)acrylnitril, (Meth)acrylsäure, $C_1$- bis $C_8$-Alkyl(meth)acrylate, Maleinsäureanhydrid, Acrylamid, Vinylester von $C_1$- bis $C_6$-Carbonsäuren, mit $C_1$- bis $C_8$-Alkyl- oder $C_6$- bis $C_{20}$-Arylgruppen N-substituierte Maleinsäureimide oder deren Mischungen.

2. Thermoplastische Formmassen nach Anspruch 1, dadurch gekennzeichnet, daß sie die Komponente A) in einer Menge von 30 bis 80 Gew.-%, die Komponente B) in einer Menge von 10 bis 40 Gew.-% und die Komponente C) in einer Menge von 10 bis 30 Gew.-% enthalten.

3. Verwendung der thermoplastischen Formmassen gemäß den Ansprüchen 1 bis 2 zur Herstellung von Fasern, Folien und Formkörpern.

4. Formkörper, erhältlich aus den thermoplastischen Formmassen gemäß den Ansprüchen 1 bis 2 als wesentliche Komponente.

**Claims**

1. A thermoplastic molding material containing, as essential components,

A) from 10 to 90% by weight of an aromatic polycarbonate,

B) from 5 to 50% by weight of a thermoplastic polyurethane and

C) from 5 to 40% by weight of a copolymer consisting of

$c_1$) from 70 to 85% by weight of styrene or a substituted styrene of the general formula I

I

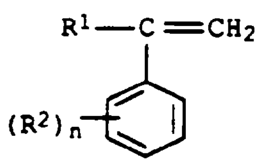

where $R^1$ is alkyl of 1 to 8 carbon atoms or hydrogen, $R^2$ is alkyl of 1 to 8 carbon atoms and n is 0, 1, 2 or 3, and

$C_2$) from 15 to 30% by weight of (moth)acrylonitrile, (meth)acrylic acid, $C_1$-$C_8$-alkyl (meth)acrylate, maleic anhydride, acrylamide, vinyl esters of $C_1$-$C_6$-carboxylic acids, maleimides N-substituted by $C_1$-$C_8$-alkyl or by $C_6$-$C_{20}$-aryl, or mixtures thereof.

**2.** A thermoplastic molding material as claimed in claim 1, which contains component A) in an amount of from 30 to 80% by weight, component B) in an amount of from 10 to 40% by weight and component C) in an amount of from 10 to 30% by weight.

**3.** Use of a thermoplastic molding material as claimed in claim 1 or 2 for the production of fibers, films and moldings.

**4.** A molding obtainable from a thermoplastic molding material as claimed in claim 1 or 2 as an essential component.

**Revendications**

**1.** Masses à mouler thermoplastiques, contenant comme composants essentiels

A) 10 à 90% en poids d'un polycarbonate aromatique
B) 5 A 50% en poids d'un polyuréthane thermoplastique et
C) 5 à 40% en poids d'un copolymère se composant de

$c_1$) 70 à 85% en poids de styrène ou de styrènes substitués de formule générale I

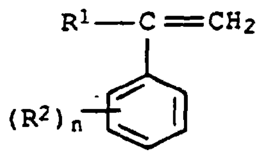

I

dans laquelle $R^1$ représente un reste alkyle ayant de 1 à 8 atomes de carbone ou un atome d'hydrogène et $R^2$ un reste alkyle de 1 à 8 atomes de carbone et n a la valeur 0, 1, 2 ou 3,
$c_2$) 15 à 30% en poids de (méth)acrylonitrile, d'acide (méth)acrylique, de (méth)acrylates d'alkyle en $C_1$-$C_8$, d'anhydride maléique, d'acrylamide, d'esters vinyliques, d'acide carboxylique en $C_1$-$C_6$, de maléimide N-substitué par des groupements alkyle en $C_1$-$C_8$ ou aryle en $C_6$-$C_{20}$ ou de leurs mélanges.

**2.** Masses à mouler thermoplastiques selon la revendication 1, caractérisées en ce qu'elles contiennent le composant A) à raison de 30 à 80% en poids, le composant B) à raison de 10 à 40% en poids et le composant C) à raison de 10 à 30% en poids.

**3.** Utilisation des masses à mouler thermoplastiques selon l'une ou l'autre des revendications 1 et 2, pour la préparation de fibres, feuilles et pièces moulées.

**4.** Pièce moulée obtenue à partir des masses à mouler thermoplastiques selon l'une ou l'autre des revendications 1 et 2 en tant que constituants essentiels.